# EUROPÄISCHE PATENTSCHRIFT

(11) **EP 1 352 925 B1**
(45) Veröffentlichungstag und Bekanntmachung des Hinweises auf die Patenterteilung: **28.12.2005**
(21) Anmeldenummer: 03006820.9
(22) Anmeldetag: 27.03.2003
(51) Int. Cl.: C08L 69/00, C08G 64/14, C08G 64/24, C08K 3/32, B01F 3/08

(54) **Verfahren zur Herstellung stabilisierten Polycarbonats**
Method for the preparation of stabilized polycarbonate
Procédé de préparation de polycarbonate stabilisé

(30) Priorität: 09.04.2002 DE 10215496; 20.08.2002 DE 10238006
(43) Veröffentlichungstag der Anmeldung: 15.10.2003
(73) Patentinhaber: Bayer MaterialScience AG, 51368 Leverkusen (DE)
(72) Erfinder: Kords, Christian, 47829 Krefeld (DE); Heuser, Jürgen Dr., 47803 Krefeld (DE); Ortiz, Antonio, 47239 Duisburg (DE)

(56) Entgegenhaltungen:
- EP-A- 0 023 570
- EP-A- 0 300 485
- EP-A- 0 905 178
- GB-A- 625 297
- GB-A- 778 903
- GB-A- 893 396
- US-A- 3 953 539
- US-A- 4 873 314
- DATABASE WPI Section Ch, Week 199528 Derwent Publications Ltd., London, GB; Class A23, AN 1995-213137 XP002247357 -& JP 07 126505 A (MITSUBISHI GAS CHEM CO INC), 16. Mai 1995 (1995-05-16)
- DATABASE WPI Section Ch, Week 199916 Derwent Publications Ltd., London, GB; Class A23, AN 1999-186480 XP002247358 -& JP 11 035815 A (TEIJIN KASEI LTD), 9. Februar 1999 (1999-02-09)
- CHEMICAL ABSTRACTS, Bd. 117, Nr. 71044, 16. März 1992 (1992-03-16), Columbus, Ohio, US; abstract no.: 1992:471044, & JP 04 081457 A (MISUBISHI KASEI) 16. März 1992 (1992-03-16)
- CHEMICAL ABSTRACTS, Bd. 134, Nr. 148377, 6. Februar 2001 (2001-02-06), Columbus, Ohio, US; abstract no.: 2001:89689, & JP 2001 031859 A (TEIJIN CHEMICALS) 6. Februar 2001 (2001-02-06)

## Beschreibung

Die Erfindung betrifft ein Verfahren zur Herstellung von hochreinen, stabilisierten Polycarbonaten durch Mischen mit einer Phosphorsäureemulsion.

Zur Herstellung von Polycarbonaten nach dem sogenannten Phasengrenzflächenverfahren werden Dihydroxidiarylalkane in Form ihrer Alkalisalze mit Phosgen in heterogener Phase in Gegenwart von anorganischen Basen wie Natronlauge und einem organischen Lösungsmittel, in dem das Produkt Polycarbonat gut löslich ist, umgesetzt. Während der Reaktion ist die wässrige Phase in der organischen Phase verteilt und nach der Reaktion wird die organische, Polycarbonat enthaltende Phase von der wässrigen abgetrennt und mehrmals mit einer wässrigen Flüssigkeit gewaschen, wobei unter anderem Elektrolyte, Restmonomere und Katalysator entfernt werden sollen. Anschließend wird die Waschflüssigkeit möglichst weitgehend abgetrennt. Schließlich wird das Polycarbonat vom organischen Lösungsmittel befreit und in eine gut weiterzuverarbeitende Form, z.B. Granulatform, überführt.

Dieses bekannte Phasengrenzflächenverfahren wird in den folgenden Publikationen beispielhaft und detailliert beschrieben:
- Schnell, "Chemistry and Physics of Polycarbonates", Polymer Reviews, Volume 9, Interscience Publishers, New York, London, Sydney 1964, S. 33 ff.
- D.C. Prevorsek, B.T. Debona und Y. Kesten, Corporate Research Center, Allied Chemical Corporation, Morristown, New Jersey 07960: "Synthesis of Poly(ester Carbonate) Copolymers" in Journal of Polymer Science, Polymer Chemistry Edition, Vol. 18,(1980), S. 75 ff.;
- D. Freitag, U. Grigo, P.R. Müller, N. Nouvertne', BAYER AG, "Polycarbonates" in Encyclopedia of Polymer Science and Engineering, Volume 1 1, Second Edition, 1988, S. 651 ff., und schließlich
- Dres. U. Grigo, K. Kircher und P. R. Müller "Polycarbonate" in Becker/Braun, Kunststoff-Handbuch, Band 3/1, Polycarbonate, Polyacetale, Polyester, Celluloseester, Carl Hanser Verlag München, Wien 1992, S. 118 ff. und 138 ff.

Gegenstand dieser Veröffentlichungen sind entsprechende Synthesen von Polycarbonat nach dem sogenannten "Phasengrenzflächenverfahren", die in einem zweiphasigen Reaktionsgemisch aus anorganischer Phase (Wasser, Alkali) und einer organischen Phase (organische Lösungsmittel, unlöslich in Wasser, meist chlorierte Kohlenwasserstoffe wie Dichlormethan und/oder Chlorbenzol) stattfindet.

Das Produkt dieser Synthese ist eine organische Phase (Syntheselösung), die das Polycarbonat gelöst enthält und eine anorganische wässrig-alkalische Phase, welche die in der Synthese entstehenden Salze, wie NaCl, Natriumhydrogencarbonat, Soda, außerdem Reste der eingesetzten Phenolate, Bisphenolate und Natriumhydroxid sowie Katalysatoren und deren Folgeprodukte sowie als Verunreinigungen aus den Edukten stammende oder als Nebenprodukt entstandene wasserlösliche Verbindungen enthält. Falls statt NaOH eine andere basische Verbindung verwendet wird enthält die wässrige alkalische Phase die entsprechenden analogen Salze bzw. Folgeprodukte.

Die folgende Aufarbeitung hat das Ziel, diese anorganisch wässrige Phase möglichst vollständig abzutrennen und die verbleibenden, insbesondere alkalischen Reste der anorganischen Verbindungen, die im löslichen und dispergierten Wassergehalt der abgetrennten organischen Phase enthalten sind möglichst vollständig aus der organischen Phase zu entfernen. Man erreicht dies durch Waschvorgänge welche eventuell mit Ansäuerungsschritten kombiniert sind. Diese Reinigungsoperationen werden möglichst vor dem Aufkonzentrieren der organischen Phase durchgeführt, wenn zum Zweck des Aufkonzentrierens thermische Verfahren angewendet werden.

Die Reinigung der Syntheselösung wird durch eine oder mehrere Wäschen dieser organischen Lösung mit Wasser erreicht. In der Regel geschieht dies mit Hilfe einer oder mehrerer Ansäuerungen und einer meist mehrstufigen Wasserwäsche.

Die Ansäuerung umfasst dabei entweder das gesamte Alkalipotential der Synthese oder aber bevorzugt, nach Trennung der Phasen im alkalischen pH-Bereich, nur die Neutralisation restlicher in der organischen Phase gelöster oder gemischt mit Resten der wässrigen Phase dispergierter Bestandteile der wässrigen Phase. Verwendet werden für derartige Ansäuerungen wässrige Mineralsäuren, insbesondere Salzsäure und Phosphorsäure, aber auch wässrige Lösungen organischer Säuren.

Diese Wäsche und Ansäuerung ist ebenfalls Gegenstand vieler Patente und Veröffentlichungen.

So wird in EP-A 0 023 570 ein Aufarbeitungsverfahren der alkalischen Syntheselösung unter Verwendung von Scherenergie erzeugenden,Separatoren, gegebenenfalls unter Verwendung von Dispergiermitteln, beschrieben.

Unter Polycarbonaten, sind erfindungsgemäß solche auf Basis geeigneter Diphenole also beispielsweise Hydrochinon, Resorcin, Dihydroxydiphenyl, Bis-(hydroxyphenyl)-alkane, Bis(hydroxy-phenyl)-cycloalkane, Bis-(hydroxyphenyl)-sulfide, Bis-(hydroxyphenyl)-ether, Bis-(hydroxyphenyl)-ketone, Bis-(hydroxyphenyl)-sulfone, Bis-(hydroxyphenyl)-sulfoxide, α,α'-Bis-(hydroxyphenyl)-diisopropylbenzole, sowie deren kernalkylierte und kernhalogenierte Verbindungen, zu verstehen.

Bevorzugte Diphenole sind Hydrochinon, Resorcin, 4,4'-Dihydroxydiphenyl, 2,2-Bis-(4-hydroxyphenyl)-1-phenyl-propan, 1,1-Bis-(4-hydroxyphenyl)-phenyl-ethan, 2,2-Bis-(4-hydroxyphenyl)propan, 2,4-Bis-(4-hydroxyphenyl)-2-methylbutan, 1,1'-Bis-(4-hydroxyphenyl)-m- oder p-diisopropylbenzol, 2,2-Bis-(3-methyl-4-hydroxyphenyl)-propan, Bis-(3,5-dimethyl-4-hydroxyphenyl)-methan, 2,2-Bis-(3,5-dimethyl-4-hydroxyphenyl)-propan, Bis-(3,5-dimethyl-4-hydroxyphenyl)-sulfon, 2,4-Bis-(3,5-dimethyl-4-hydroxy-phenyl)-2-methylbutan, 1,1'-Bis-(3,5-dimethyl-4-hydroxyphenyl)-m- oder p-diisopropylbenzol und 1,1-Bis-(4-hydroxyphenyl)-3,3,5-trimethylcyclohexan.

Besonders bevorzugte Diphenole sind Resorcin, 4,4'-Dihydroxydiphenyl, 1,1-Bis-(4-hydroxyphenyl)-phenyl-ethan, 2,2-Bis-(4-hydroxyphenyl)-propan, 2,2-Bis(3,5-dimethyl-4-hydroxyphenyl)-propan, 1,1'-Bis-(3,5-dimethyl-4-hydroxyphenyl)-m- oder p-diiso-propyl-benzol, 1,1-Bis-(4-hydroxyphenyl)-cyclohexan und 1,1-Bis-(4-hydroxyphenyl)-3,3,5-trimethylcyclohexan.

Diese und weitere geeignete Diphenole sind z.B. in den US-A 3 028 635, 2 999 835, 3 148 172, 2 991 273, 3 271 367, 4 982 014 und 2 999 846, in den DE-A 1 570 703, 2 063 050, 2 036 052, 2 211 956 und 3 832 396, der französischen Patentschrift 1 561 518, in der Monographie "H. Schnell, Chemistry and Physics of Polycarbonates, Interscience Publishers, New York 1964", S. 77 ff. sowie in den JP-A 62039/1986, 62040/1986 und 105550/1986 beschrieben

Im Falle der Homopolycarbonate wird nur ein Diphenol eingesetzt, im Falle der Copolycarbonate werden mehrere Diphenole eingesetzt, wobei selbstverständlich die verwendeten Bisphenole, wie auch alle anderen der Synthese zugesetzten Chemikalien und Hilfsstoffe mit den aus ihrer eigenen Synthese stammenden Verunreinigungen kontaminiert sein können, obwohl es wünschenswert ist, mit möglichst sauberen Rohstoffen zu arbeiten.

Als Carbonatprecursor werden Halogenderivate der Kohlensäure verwendet wie sie in der zitierten Literatur beschrieben werden, insbesondere Phosgen.

Katalysatoren sind Ammonium- und/oder Phosphoniumverbindungen oder tertiäre Amine wie sie in der Literatur beschrieben sind, insbesondere N-Ethylpiperidin, N-Methylpiperidin, Triethylamin und Tributylamin, oder deren Mischungen, wobei diese Katalysatoren in einer Dosierung oder aber auch durch mehrere Dosierungen in zeitlichem (batch-Verfahren) oder räumlichem (Kontiverfahren) Abstand zugegeben werden können.

Als alkalische Komponenten können alle in Wasser löslichen oder dispergierbaren Alkali- und Erdalkalihydroxyde, bevorzugt jedoch Natriumhydroxyd, Kaliumhydroxyd, Magnesiumhydroxyd und/oder Calciumhydroxyd (Aufschlämmung von Calciumoxyd in Wasser) oder deren Mischungen verwendet werden.

Der Feststoffgehalt der zu waschenden Polymerlösung kann je nach Molekulargewicht des Polymers zwischen 0,5 Gew.-% und 30 Gew.-% Polymer schwanken, bevorzugt sind bei Molekulargewichten (Gewichtsmittel "Mw") zwischen 8000 und 50000 Polymer-Feststoffgehalte zwischen 2 Gew.-% und 25 Gew.-%, bevorzugt zwischen 5 Gew.-% bis 22 Gew.-% Polymer, besonders bevorzugt Polymer-Feststoffgehalte zwischen 7 Gew.-% und 20 Gew.-% und bei Molekulargewichten (Mw) > 50000 zwischen 2 Gew.-% bis 15 Gew.-% Polymer.

Die Molmasse (Gewichtsmittel Mw) wird mittel Gelpermeationschromatographie (GPC) mit Methylenchlorid als Eluent bestimmt. Die Detektion erfolgt dabei mittels UV oder Brechungsindex (RI). Es werden Säulen auf Basis von Polystyrolgelen, geeicht gegen Polycarbonat verwendet. Im vorliegenden Fall wurde ein HP 1050 verwendet.

Das organische Lösungsmittel der zu waschenden Polycarbonatlösung besteht aus solchen Lösungsmittel, die das betreffende Polycarbonat lösen und mit Wasser ein zweiphasiges Synthesegemisch ergeben, wie aliphatische, gegebenenfalls verzweigte teil- oder perhalogenierte Lösungsmittel mit 1 bis 10 Kohlenstoffatomen, wobei als Halogen Chlor oder Fluor verwendet wird, wie Methylenchlorid, Trichlorethan, Tetrachlorethen, weiterhin aromatische gegebenenfalls substituierte Verbindungen mit 6 bis 18 C-Atomen wie Benzol, Toluol, o-, m- und/oder p-Xylol, Methoxy- oder Ethoxybenzol, Diphenyl, Diphenylether, Chlorbenzol, o-, m- und/oder p-Dichlorbenzol, sowie auch Mischungen aus diesen Lösungsmitteln. Bevorzugte Lösungsmittel sind Methylenchlorid und Chlorbenzol, insbesondere Chlorbenzol.

Geeignete Kettenabbrecher sind sowohl Monophenole als auch Monocarbonsäuren. Geeignete Monophenole sind Phenol, Alkylphenole wie Kresole, p-tert.Butylphenol, p-n-Octylphenol, p-iso-Octylphenol, p-n-Nonylphenol und p-iso-Nonylphenol, Halogenphenole wie p-Chlorphenol, 2,4-Dichlorphenol, p-Bromphenol und 2,4,6-Tribromphenol, bzw. deren Mischungen.

Geeignete Monocarbonsäuren sind Benzoesäure, Alkylbenzoesäuren und Halogenbenzoesäuren.

Die Menge an einzusetzendem Kettenabbrecher beträgt 0,5 Mol-% bis 10 Mol-%, bezogen auf Mole an jeweils eingesetzten Diphenolen. Die Zugabe der Kettenabbrecher kann vor, während oder nach der Phosgenierung erfolgen.

Geeignete Verzweiger sind die in der Polycarbonatchemie bekannten tri- oder polyfunktionellen Verbindungen, insbesondere solche mit drei oder mehr phenolischen OH-Gruppen.

Geeignete Verzweiger sind beispielsweise Phloroglucin, 4,6-Dimethyl-2,4,6-tri-(4-hydroxyphenyl)-heptan, 2,4,6-Dimethyl-2,4,6-tri-(4-hydroxyphenyl)-heptan, 1,3,5-Tri-(4-hydroxyphenyl)-benzol, 1,1,1-Tri-(4-hydroxyphenyl)-ethan, Tri-(4-hydroxyphenyl)-phenylmethan, 2,2-Bis-[4,4-bis-(4-hydroxyphenyl)-cyclohexyl]-propan, 2,4-Bis-(4-hydroxyphenyl-isopropyl)-phenol, 2,6-Bis-(2-hydroxy-5'-methyl-benzyl)-4-methylphenol, 2-(4-Hydroxyphenyl)-2-(2,4-dihydroxyphenyl)-propan, Hexa-(4-(4-hydroxyphenyl-isopropyl)phenyl)-orthoterephthalsäureester, Tetra-(4-hydroxyphenyl)-methan, Tetra-(4-(4-hydroxy-phenyl-isopropyl)-phenoxy)-methan und 1,4-Bis-(4',4"-dihydroxy-triphenyl)-methyl)-benzol sowie 2,4-Dihydroxybenzoesäure, Trimesinsäure, Cyanurchlorid und 3,3-Bis-(3-methyl-4-hydroxyphenyl)-2-oxo-2,3-dihydroindol oder deren Mischung.

Die Menge der gegebenenfalls einzusetzenden Verzweiger beträgt 0,05 Mol-% bis 2,5 Mol-%, vorzugsweise 0.1 bis 1.0 Mol-%, bezogen wiederum auf Mole an jeweils eingesetzten Diphenolen.

Die Verzweiger können entweder mit den Diphenolen und den Kettenabbrechern in der wässrig alkalischen Phase vorgelegt werden, oder in einem organischen Lösungsmittel gelöst vor der Phosgenierung zugegeben werden.

Alle diese Maßnahmen zur Herstellung der Polycarbonate sind dem Fachmann geläufig.

Herstellungsweise der erfindungsgemäß zu verwendenden Polycarbonate ist das bekannte Grenzflächenverfahren.

Die Molmassen Mw der erfindungsgemäßen Polycarbonate, liegen zwischen 12 000 und 50 000, bevorzugt zwischen 12 000 und 40 000, besonders bevorzugt zwischen 15 000 und 40 000. Die Bestimmung der Molmassen erfolgt nach dem bereits zuvor beschriebenen GPC-Verfahren.

Hochreines Polycarbonat wird für optische und magnetoptische Datenspeicher, optische Linsen und Prismen, Verscheibungen für Kraftfahrzeuge und Scheinwerfer, Verscheibungen anderer Art wie für Gewächshäuser verwendet.

Die Reduzierung der Verarbeitungszeiten während des Spritzgussverfahrens führt zu höheren Schmelzetemperaturen während des Herstellverfahrens der Formkörper, und diese verursacht eine zunehmende Vergilbung und thermische Schädigung des Polycarbonats, außerdem reagieren unter derartigen Bedingungen die Entformungshilfsmittel mit dem Polycarbonat. Der Erfindung liegt daher die Aufgabe zugrunde, bei geringsten Konzentrationen an bekannten Stabilisatoren hohe stabilisierende Effekte zu erreichen, ohne dass die übrigen Eigenschaften des Polycarbonats und der daraus hergestellten Formteile verändert werden.

Die folgenden Versuche zu einer entsprechenden Stabilisierung sind bekannt:
- JP 10060247 A: 0,001 bis 0,01 Gewichtsanteile Phosphorsäure im PC für optische Datenspeicher, Linsen etc., gute Transparenz, gute Wärmebeständigkeit ohne Zersetzung und Vergilbung.
- JP 04081457 A: 5 bis 50 ppm Phosphorsäure zum Polycarbonat, keine Flecken und Fehler bei Exposition mit hoher Temperatur und Feuchte.
- JP 01315459 A: 0,0005 bis 0,01 Gewichtsanteile Phosphorsäure, gut für optische Datenspeicher, Linsen und Prismen, Verarbeitung bei 300 bis 380°C ohne thermische Schädigung.
- JP 2001031859 A: Wenigstens ein phosphorbasierender Stabilisator mit einem Gewichtsanteil von 0,0001 bis 0,15, gute Wärmebeständigkeit.
- JP 07126505 A: PC mit 0,05 bis 5 ppm Phosphorsäure, PC für CDs etc.

In diesem Stand der Technik wird eine Dosierung von Phosphorsäure zusammen mit einem Entformungsmittel in die Polycarbonatschmelze offenbart. Dies verbesserte die thermische Stabilität jedoch nicht zufriedenstellend. So reagiert insbesondere bei der Weiterverarbeitung zu Formkörpern immer noch das gesamte Entformungsmittel mit dem PC. Die gemäß Stand der Technik erzielten Stabilisierungseffekte sind daher immer noch unbefriedigend. Weitere Verbesserungen in diesem Bereich sind höchst wünschenswert.

Es stellte sich daher, ausgehend vom Stand der Technik die Aufgabe ein verbessertes Verfahren zur Stabilisierung von Polycarbonaten bereitzustellen.

Es wurde nun überraschenderweise gefunden, dass bei einer intensiven Einmischung geringster Anteile einer Phosphorsäureemulsion in die gewaschene Polycarbonatlösung eine Stabilisierung des Polycarbonates gegenüber der thermischen Belastung im weiteren PC-Herstellverfahren und bei der Weiterverarbeitung zu Formkörpern auftritt.

Unter Phosphorsäure ist dabei erfindungsgemäß eine beliebige phosphorhaltige Mineralsäure, vorzugsweise Phosphorsäure als Ortho-, Meta oder Polyphosphorsäure, phosphorige Säure und hypophosphorige Säure, besonders bevorzugt Phosphorsäure als Ortho-, Meta oder Polyphosphorsäure, ganz besonders bevorzugt Orthophosphorsäure zu verstehen.

Dabei ist nicht die Eigenschaft der Phosphorsäure und auch nicht der Anteil der Phosphorsäure im Polycarbonat entscheidend, sondern die Bildung einer Phosphorsäureemulsion in einem organischen Lösungsmittelgemisch und die Verteilung dieser so hergestellten Phosphorsäureemulsion in der PC-Lösung nach der Polycarbonatwäsche. Die Phosphorsäure verbleibt in der Polycarbonatlösung, die dem nachfolgenden Eindampfprozess zur Isolierung des Polycarbonats zugeiuhrt wird. Diese stabilisierende Wirkung ist immer dann gegeben, wenn in dem vorangehenden Waschverfahren eine andere Säure als Phosphorsäure zur Entfernung des Katalysators eingesetzt wird.

Die Phosphorsäureemulsion wird hergestellt, indem eine 6 bis 10 %ige, bevorzugt 7 bis 9 %ige, besonders bevorzugt 8 %ige, wässrige Phosphorsäure mit einem Anteil von 500 bis 2000 ppm, bevorzugt 800 bis 1200 ppm, besonders bevorzugt 1000 ppm, in einem organischen Lösungsmittelgemisch, bestehend aus Monochlorbenzol und Dichlormethan emulgiert wird. Der Anteil Dichlormethan im Lösungsmittelgemisch liegt zwischen 10 und 70 %, bevorzugt 20 bis 60 %, besonders bevorzugt 50 %. Die Phosphorsäure-Lösungsmittelemulsion wird durch ständiges Mischen der beiden Phasen stabil gehalten. Als Mischorgane können z.B. Mischpumpen oder intensive, schnell laufende Rührer eingesetzt werden.

Die Dosierung der Phosphorsäureemulsion erfolgt nach der Polycarbonatwäsche und vor dem Isolierverfahren, also in die gewaschene PC-Lösung. Dosiert wird die Phosphorsäureemulsion in einer Menge, dass zwischen 0,15 und 2 ppm, bevorzugt 0,3 bis 1,5 ppm, besonders bevorzugt 0,6 bis 1 ppm, ganz besonders bevorzugt 0,8 ppm, Phosphor, bezogen auf Polycarbonat, erreicht werden. Im Falle der Orthophosphorsäure entspricht dies zwischen 0,5 und 5 ppm, bevorzugt 1 bis 4 ppm, besonders bevorzugt 2 bis 3 ppm, ganz besonders bevorzugt 2,5 ppm, Phosphorsäure bezogen auf Polycarbonat.

Alle Prozentangaben im vorliegenden Kontext sind als Gew. % zu verstehen, soweit nichts anderes explizit angegeben ist.

Bevorzugt, besonders bevorzugt oder ganz besonders bevorzugt sind Ausführungsformen, welche von den unter bevorzugt, besonders bevorzugt oder ganz besonders bevorzugt genannten Parametern, Verbindungen, Definitionen und Erläuterungen Gebrauch machen.

Die oben aufgeführten allgemeinen oder in Vorzugsbereichen aufgeführten Definitionen, Parameter, Verbindungen und Erläuterungen können jedoch auch untereinander, also zwischen den jeweiligen Bereichen und Vorzugsbereichen beliebig kombiniert werden.

Die Verteilung der Phosphorsäureemulsion in der Polycarbonatlösung erfolgt durch einen schnell laufenden dynamischen Mischer. Hierfür kann z.B. eine Mischpumpe oder die Mischkammer eines Tellerseparators verwendet werden.

Die nachfolgenden Beispiele sollen die vorliegende Erfindung illustrieren, ohne sie jedoch einzuschränken.

### Vergleichsbeispiel

Polycarbonatlösung mit HCl gewaschen, wird in einem Eindampfverfahren schrittweise vom Lösungsmittel befreit, in die in einem Zweiwellenextruder Typ ZSK geförderte Schmelze wird über einem Seitenstromtextruder PC zusammen mit dem Entformungsmittel Glycerinmonostearat und 5 ppm Phosphorsäure aufgeschmolzen und vermischt. Das so erhaltene PC-Granulat hat einen Yellowness-Index von 1,5 bis 1,8 das Glycerinmonostearat reagiert zu 95 bis 100 % mit dem Polycarbonat zu GMS-Carbonat.

### Beispiel

Eine PC-Lösung mit HCl gewaschen wird nach der Wäsche mit einer Emulsion aus 8 % Phosphorsäure mit einem Anteil von 1000 ppm in einem Gemisch aus 90 % Monochlorbenzol und 10 % Dichlormethan durch eine ständig laufende Mischpumpe emulgiert und über die Mischkammer eines Tellerseparators in die PC-Lösung eingemischt. Anschließend wir das Polycarbonat wie üblich isoliert. Der Anteil der Phosphorsäüre bezogen auf Polycarbonat beträgt 3 ppm. Das Entformungsmittel wird wie im Beispiel 1 allerdings ohne dem Zusatz der Phosphorsäure dosiert und eingemischt, im Granulat liegt dieses Entformungsmittel unverändert vor, der Yellowness-Index liegt bei 1,2 bis 1,3. Auch in der Verarbeitung zu CD-Formkörpern verändert sich das Entformungsmittel nicht.

Vergleicht man das Ergebnis des Verfahrens gemäß Stand der Technik (Vergleichsbeispiel) mit dem des erfindungsgemäßen Verfahrens, so erkennt man unmittelbar dass das erhaltene Polycarbonat gemäß erfindungsgemäßem Verfahren zum einen überraschend überlegenen Yellownessindex aufweist und zum anderen bei der Weiterverarbeitung das Entformungsmittel im Gegensatz zum Stand der Technik nicht verändert. Diese Überlegenheit war nicht zu erwarten und belegt die erfinderische Tätigkeit, welche der vorliegenden Anmeldung zugrunde liegt.

## Patentansprüche

1. Verfahren zur Herstellung von Polycarbonat nach dem Phasengrenzflächenverfahren **dadurch gekennzeichnet, dass** die nach Wäsche mit einer anderen Säure als Phosphorsäure erthaltene organische Polycarbonatlösung mit einer Phosphorsäureemulsion, erhältlich durch Emulgieren von wässriger Phosphorsäure in organischen Lösungsmitteln, wobei die Emulsion durch ständiges, intensives Mischen der Emulsion homogen wird und unter Phosphorsäure eine beliebige phosphorhaltige Mineralsäure zu verstehen ist, intensiv vermischt wird und die Phosphorsäureemulsion, welche so dosiert wird, dass im fertigen Polycarbonat 0.15 bis 2 ppm an Phosphor enthalten sind, anschließend in der Polycarbonatlösung verbleibt, die dem nachfolgenden Eindampfprocess zur Isolierung des Polycarbonats zugeführt wird.

## Claims

1. Process for the preparation of polycarbonate by the interfacial process, **characterised in that** the organic polycarbonate solution obtained after washing with an acid other than phosphoric acid is mixed intensively with a phosphoric acid emulsion obtainable by emulsification of aqueous phosphoric acid in organic solvents, the emulsion becoming homogeneous by continuous intensive mixing of the emulsion and phosphoric acid being understood as meaning any desired mineral acid containing phosphorus, and the phosphoric acid emulsion, which is so metered **in that** from 0.15 to 2 ppm of phosphorus are contained in the finished polycarbonate, then remains in the polycarbonate solution, which is fed to the subsequent process of concentration by evaporation for isolation of the polycarbonate.

## Revendications

1. Procédé de fabrication de polycarbonate suivant le procédé interfacial, **caractérisé en ce que** la solution organique de polycarbonate obtenue après le lavage avec un autre acide que l'acide phosphorique est mélangé intensément avec une émulsion d'acide phosphorique, disponible par émulsification d'une solution aqueuse d'acide phosphorique dans des solvants organiques, l'émulsion devenant homogène par mélange intensif permanent de l'émulsion et acide phosphorique signifiant un acide minéral quelconque contenant du phosphore, et l'émulsion d'acide phosphorique, qui est dosée de telle façon qu'il reste dans le polycarbonate terminé, 0,15 à 2 ppm de phosphore, restant ensuite dans la solution de polycarbonate qui est envoyée au processus d'évaporation subséquent d'isolation du polycarbonate.
